(19) **Europäisches Patentamt**

**European Patent Office**

**Office européen des brevets**

(11) **EP 0 641 420 B1**

(12) **EUROPÄISCHE PATENTSCHRIFT**

(45) Veröffentlichungstag und Bekanntmachung des Hinweises auf die Patenterteilung:
**03.01.1996 Patentblatt 1996/01**

(21) Anmeldenummer: **92921082.1**

(22) Anmeldetag: **07.10.1992**

(51) Int Cl.⁶: **F16H 61/04**

(86) Internationale Anmeldenummer:
**PCT/DE92/00847**

(87) Internationale Veröffentlichungsnummer:
**WO 93/24772 (09.12.1993 Gazette 1993/29)**

(54) **VERFAHREN ZUR KORREKTUR DER SCHALTQUALITÄT EINES AUTOMATISCHEN GETRIEBES**

PROCESS FOR CORRECTING THE GEAR-CHANGING QUALITY OF AN AUTOMATIC GEARBOX

PROCEDE DE CORRECTION DE LA QUALITE DU CHANGEMENT DES VITESSES DANS UNE BOITE DE VITESSES AUTOMATIQUE

(84) Benannte Vertragsstaaten:
**DE ES FR GB SE**

(30) Priorität: **25.05.1992 DE 4217270**

(43) Veröffentlichungstag der Anmeldung:
**08.03.1995 Patentblatt 1995/10**

(73) Patentinhaber: **Adam Opel Aktiengesellschaft D-65428 Rüsselsheim (DE)**

(72) Erfinder:
• **BECKER, Gernot D-6501 Dexheim (DE)**
• **KLEILA, Hans D-6090 Rüsselsheim (DE)**
• **REITENBACH, Rainer D-6094 Bischofsheim (DE)**

(74) Vertreter: **Bergerin, Ralf, Dipl.-Ing. D-65423 Rüsselsheim (DE)**

(56) Entgegenhaltungen:
EP-A- 0 176 750          DE-A- 3 600 756
DE-A- 4 010 904          DE-A- 4 110 910
DE-A- 4 120 761          US-A- 4 970 916
US-A- 5 086 670

**Beschreibung**

Verfahren zur Korrektur der Schaltqualität eines automatischen Getriebes

Die Erfindung betrifft ein Verfahren zur Korrektur der Schaltqualität eines automatischen Getriebes, das mit einem Motor gekoppelt ist und bei dem über druck- oder öldurchsatzbeaufschlagende Stellglieder Reibelemente in Eingriff bringbar sind zur Ausführung von Schaltvorgängen, wobei der von den Stellgliedern beaufschlagte Leitungsdruck mittels einer elektronischen Einrichtung erfaßt und in Abhängigkeit von verschiedenen Betriebsparametern korrigiert wird.

Unter dem Begriff "Schaltqualität" soll das Schaltverhalten der Kupplungen bzw. Freiläufe eines automatischen Getriebes von einem Gang in einen anderen verstanden werden. Dabei kann es vorkommen, daß die Kupplungen den Schaltvorgang zu "hart" oder zu "weich" übertragen, da bekanntlich Drehzahlen von abgehenden und antreibenden Wellen angeglichen werden müssen.

Diese Schaltqualitätsunterschiede können herrühren aus Streuungen von Getriebebauteilen in der Serie wie beispielsweise

- elektromagnetische Stellglieder oder Magnetventile (MV),
- Federn,
- Durchmesser an den Ventilen,
- Reibwerte an den Lamellen (Kapazität der Kupplung),
- unterschiedliche Motormomente.

Es ist also eine Korrektur notwendig, die diese Streuungen auffängt.

Aus der DE-OS 41 20 761 ist eine Leitungsdrucksteuerung für ein Automatikgetriebe bekannt, bei der einer Verschlechterung der Schalteigenschaften, die durch Reibelemente, Verschleiß bzw. durch Veränderung in der Hydraulikfluidtemperatur hervorgerufen wird, vorgebeugt wird, indem die Schaltzeitdauer mit einer vorgegebenen optimalen Zeitdauer verglichen wird. Bei einer erfaßten Abweichung wird der Leitungsdruck entsprechend erhöht oder abgesenkt. Bei Einsatz Von Zusatzgeräten, wie z. B. von Kompressoren für Klimaanlagen, tritt eine Verfälschung der tatsächlich erfaßten Schaltparameter auf, was einerseits zum Rutschen von Reibelementen oder andererseits zu Getriebeschaltstößen führen kann.

Der Vergleich der aktuellen Schaltzeitdauer mit einer vorgegebenen optimalen Zeitdauer erfaßt nicht alle dynamischen Vorgänge, die bei einem Schaltvorgang auftreten können.

Die EP-A-0 176 750 beschreibt ein Verfahren zur elektronischen Steuerung eines automatischen Fahrzeuggetriebes, wobei elektrohydraulisch betätigte Reibelemente Schaltvorgänge bewirken. Die Schaltung erfolgt durch eine adaptive Steuerung, wobei als Steuergröße ein hydraulischer Druck Verwendung findet. Es sollen Schaltqualitätsschwankungen vermieden werden. In dem o. g. Verfahren ist vorgesehen, Sollgrößen mit Istgrößen zu vergleichen, Korrekturwerte zu bilden und diese zur Korrektur der Steuergröße zu nutzen. Als Steuergröße kann auch die Zeitdauer des Schaltvorganges Anwendung finden. Letztlich wird die tatsächlich relevante Größe, das Übersetzungsverhältnis, immer nur indirekt beeinflußbar. Der Schaltdruck oder die Schaltzeit lassen keine direkten Schlüsse über das aktuelle Übersetzungsverhältnis zu.

Der vorliegenden Erfindung liegt die Aufgabe zugrunde, ein Verfahren zur Korrektur der Schaltqualität anzugeben, bei der ein optimales Kriterium, welches die Schaltqualität repräsentiert, herangezogen wird.

Diese Aufgabe wird erfindungsgemäß dadurch gelöst, daß für jeden spezifischen Gangwechsel neben dem sich ergebenden Übersetzungsverhältnis als Funktion der Zeit vom Auslösen des Schaltvorganges bis zu dessen Beendigung auch die erste Ableitung gebildet und in der elektronischen Einrichtung eine Zuordnung von Werten des Übersetzungsverhältnisses zu den entsprechenden Werten der ersten Ableitung in Form einer Kennlinie erfolgt, und daß diese gemessenen Kennlinien mit in der Einrichtung vorhandenen Referenzkennlinien einschließlich eines Toleranzbereichs verglichen werden, und daß bei Ungleichheit ein Korrekturfaktor ermittelt wird, der beim nächsten identischen Gangwechsel zu einer inkrementalen Erhöhung oder dekrementalen Erniedrigung eines Korrekturwertes um den Korrekturfaktor führt und somit eine Korrektur des Leitungsdruckes oder des Öldurchflusses mittels der druck- oder öldurchsatzbeaufschlagenden von der elektronischen Einrichtung entsprechend dem Korrekturwert angesteuerten Stellglieder erfolgt.

Nach einer besonders vorteilhaften Ausgestaltung der Erfindung ist vorgesehen, daß die Einrichtung bei einem Korrekturwert, der vorzugsweise betragsmäßig größer 3 ist, über ein Display oder eine akustische Warneinrichtung ein Hinweis auf einen fehlerhaft verlaufenden Schaltvorgang ausgegeben wird. Weiter ist vorgesehen, daß der einzustellende Leitungsdruck oder Öldurchsatz in der elektronischen Einrichtung nach einer mathematischen linearen Beziehung errechnet wird, wobei die Stellglieder in Form von Magnetventilen ausgebildet sind und entsprechend den mathematischen Beziehungen mit einem zu diesen Größen proportionalen Tastverhältnis elektrisch angesteuert werden.

Weitere vorteilhafte Ausgestaltungen der Erfindung ergeben sich aus den Unteransprüchen.

Ausführungsbeispiele der Erfindung sind in den Figuren dargestellt. Es zeigen:

Fig. 1    ein schematisches Blockschaltbild eines automatischen Getriebes mit einer elektronischen Einrichtung als Getriebesteuerung;

Fig. 2    ein mechanisches Ersatzbild eines automatischen Getriebes;

Fig. 3    ein Flußdiagramm zur Erzeugung der Korrekturfaktoren;

Fig. 4    ein Flußdiagramm zur Ermittlung des Korrekturwertes;

Fig. 5    ein Diagramm für den Verlauf des Übersetzungsverhältnisses als Funktion der Schaltzeit für einen Gangwechsel vom 1. in den 2. Gang;

Fig. 6    ein Diagramm des Verlaufs der ersten Ableitung des Übersetzungsverhältnisses über der Zeit für eine Schaltung vom 1. in den 2. Gang;

Fig. 7    ein Diagramm des Verlaufs der ersten Ableitung des Übersetzungsverhältnisses als Funktion des Übersetzungsverhältnisses bei einem Gangwechsel vom 1. in den 2. Gang;

Fig. 8    ein Diagramm des Verlauf der ersten Ableitung des Übersetzungsverhältnisses als Funktion des Übersetzungsverhältnisses bei einer Rückschaltung vom 3. in den 2. Gang;

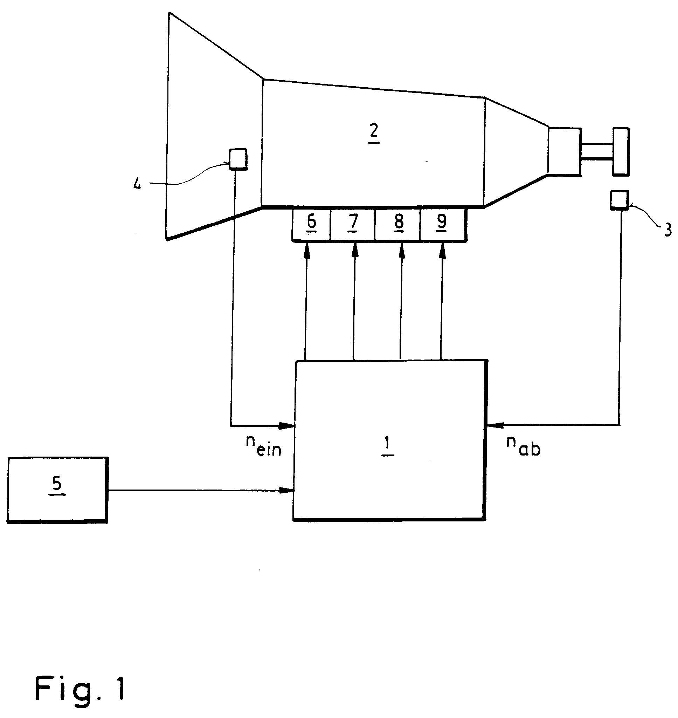

Das in Figur 1 gezeigte Blockschaltbild besteht aus der elektronischen Einrichtung 1, die die Steuerung des automatischen Getriebes 2 übernimmt und aus einem Mikrocomputer mit Schreib/Lesespeicher, Festwertspeicher, Interfaces mit Ein- und Ausgängen. Über einen Drehzahlsensor 4 wird die Getriebeeingangsdrehzahl $n_{Ein}$ und über den Drehzahlsensor 3 die Getriebeausgangsdrehzahl $n_{Ab}$ als Eingangsgröße für die elektrische Einrichtung 1 erfaßt. Als weitere Eingangsgröße wird der Einrichtung 1 der Drosselklappenöffnungswinkel 5 zugeführt. Ausgangsseitig werden von der elektronischen Einrichtung 1 beispielsweise vier Magnetventile 6, 7, 8, 9 angesteuert, durch die der Gangwechsel des automatischen Getriebes 2 bewirkt wird. Dabei können die Magnetventile 6 und 7 vier Gangwechselvorgänge steuern, entsprechend den Bitkombinationen einer zweistelligen Binärzahl. Über das Magnetventil 8 wird beispielsweise der Leitungsdruck und über das Magnetventil 9 der Öldurchfluß des hydraulischen Steuerungssystems des automatischen Getriebes 2 beeinflußt, um adaptive Korrekturen zur Verbesserung der Schaltqualität vorzunehmen.

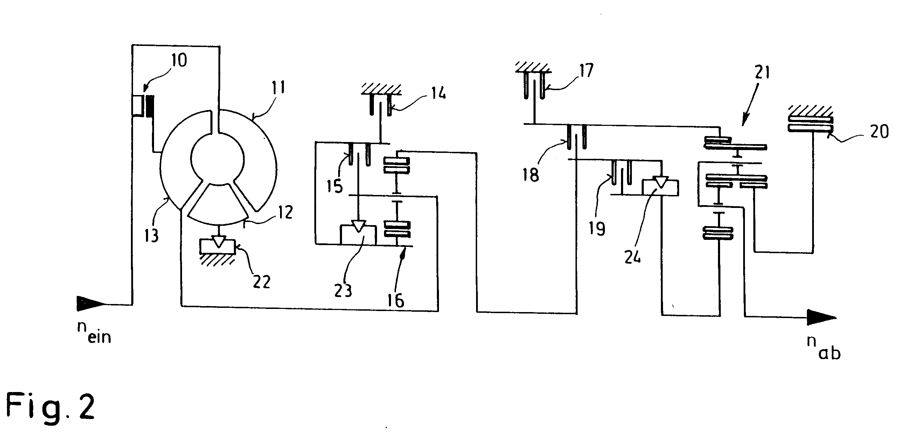

Das in Figur 2 gezeigte mechanische Ersatzbild eines automatischen Getriebes besteht aus dem Drehmomentwandler mit der Pumpe 11, der Turbine 13 und dem Leitrad 12, das mit einem Freilauf 22 gekoppelt ist. Der Antrieb erfolgt über die Pumpe 11, die mit der Getriebeeingangsdrehzahl $n_{Ein}$ angetrieben wird. 10 stellt eine Wandlerüberbrückungskupplung dar. Die Turbine 13 treibt den Steg eines ersten Planetengetriebesatzes 16 an, der über die Reibelemente 14, 15 mit einem Freilauf 23 zur Steuerung des Planetenradsatzes 16 zusammenwirkt. Dem ersten Planetensatz 16 ist ein zweiter Planetensatz 21 in Form eines Ravigneaux-Getriebesatzes nachgeschaltet, der über die Reibelemente 17, 18, 19, 20 und Freilauf 24 gesteuert wird. Die Ausgangsdrehzahl des automatischen Getriebes ist $n_{Ab}$. Die Reibelemente 14, 15, 17, 18, 19 sind als Kupplungen ausgebildet, während das Reibelement 20 ein Bremsband darstellt. Durch eine entsprechende Kombination von in Eingriff zu bringenden und zu lösenden Reibelementen 14, 15, 17, 18, 19, 20, gesteuert durch die Magnetventile 6 und 7, wird der Gangwechsel eingeleitet, wobei der Eingriff nicht zu hart aber auch nicht zu weich im Sinne einer guten Schaltqualität sein sollte. Dies wird erreicht, indem der Leitungsdruck, mit dem die Reibelemente oder Kupplungen 14, 15, 17, 18, 19 geschaltet werden, über das Magnetventil 8 adaptiv verändert wird im Hinblick auf das erfindungsgemäße Kriterium Schaltqualität. Dieser Leitungsdruck wird entsprechend der mathematischen Beziehung

$$P_{akt} = P_{Kalibr.} + \frac{K_x \cdot P_{Kalibr.}}{D_1}$$

wobei sind:

$P_{akt}$        = der aktuell zu verwendende Druck
$P_{Kalibr.}$    = der Basisdruck für die jeweilige Schaltung
$K_x$            = Korrekturwert, definiert durch die adaptive Änderung
$D_1$            = veränderbarer Wert zur Sensitivitätsanpassung (z. B. 10),

bei jedem Schaltvorgang adaptiv über den Korrekturwert $K_x$ angepaßt. Das Reibelement 20, das als Bremsband ausgeführt ist, wird ebenfalls adaptiv bei jedem Schaltvorgang, wo dieses in Eingriff zu bringen ist, über den Öldurchfluß im Hinblick auf eine gute Schaltqualität durch den Korrekturwert $K_x$ nach der mathematischen Beziehung

$$\dot{Q}_{akt} = \dot{Q}_{Kalibr.} + \frac{K_x \cdot \dot{Q}_{Kalibr.}}{D_2}$$

wobei sind:

$\dot{Q}_{akt}$ = der aktuell zu verwendende Durchfluß
$\dot{Q}_{Kalibr.}$ = der Basiswert
$K_x$ = der Korrekturwert
$D_2$ = veränderbarer Wert zur Sensitivitätsanpassung (z. B. 10),

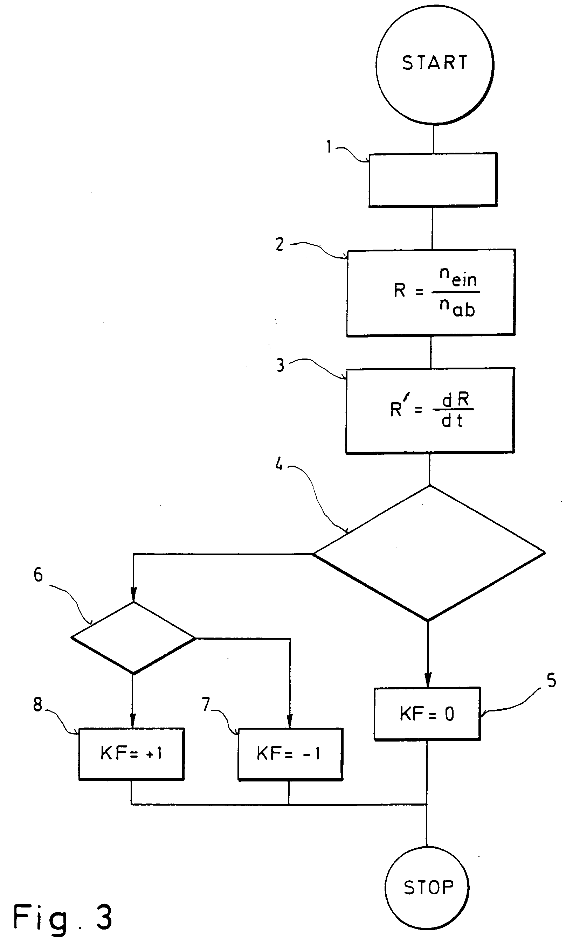

durch das Magnetventil 9 gesteuert. Bevor der Korrekturwert $K_x$ bestimmt wird, muß zuerst der Korrekturfaktor KF gemäß Flußdiagramm der Figur 3 ermittelt werden. Dazu erfolgt nach dem Start in einem ersten Schritt eine Bereichsfestlegung dergestalt, daß bei Hochschaltungen der Drosselklappenöffnungswinkel, bei dem die Hochschaltung erfolgt, gemessen und in der elektronischen Einrichtung 1 gespeichert wird. Bei Rückschaltungen wird die Geschwindigkeit, bei der die Rückschaltung erfolgt, gespeichert. In einem zweiten Schritt wird das Übersetzungsverhältnis

$$R = \frac{n_{Ein}}{n_{Ab}}$$

als Funktion der Zeit gemessen über die Drehzahlsensoren 3 und 4 gemäß Figur 1, und zwar von der Einleitung des Gangwechsels bis zu dessen Beendigung. Im dritten Schritt wird die erste Ableitung

$$R' = \frac{dR}{dt}$$

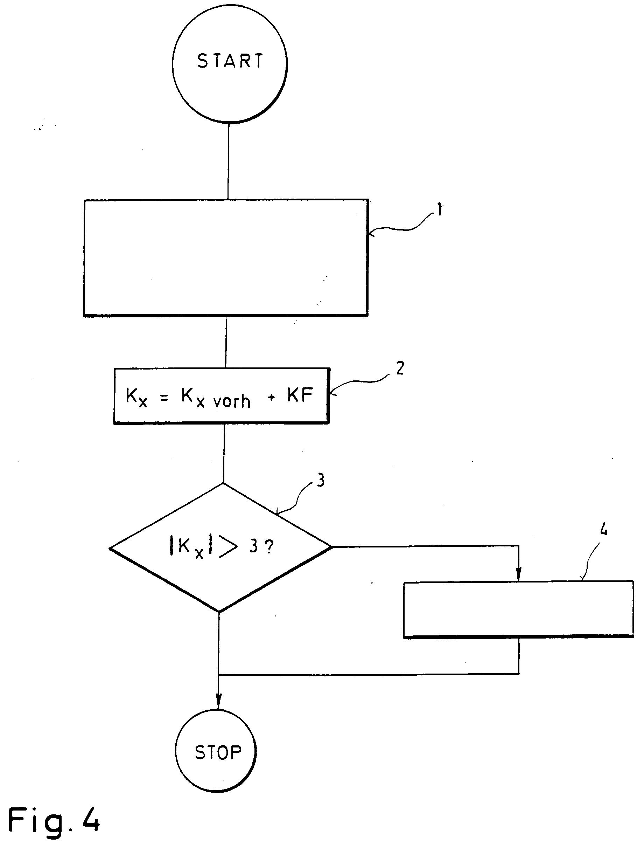

gebildet. Im vierten Schritt erfolgt die Abfrage, ob die Schaltqualität in Ordnung ist. Dazu wird die erste Ableitung R' als Funktion von R in Form einer Kennlinie gebildet, die mit einer Referenzkennlinie einschließlich eines Toleranzbereiches in einem Speicher der elektronischen Einrichtung 1 verglichen wird. Ist die gemessene Kennlinie innerhalb des Toleranzbereiches der Referenzkennlinie, so wird die Schaltqualität als in Ordnung angesehen und im fünften Schritt ein Korrekturfaktor KF zu Null gebildet. Ist die gemessene Kennlinie außerhalb des Toleranzbereiches der Referenzkennlinie, so wird in einer zweiten Entscheidung eines sechsten Schrittes abgefragt, ob der Schaltvorgang zu fest oder zu weich war. Dies läßt sich erfassen, indem man feststellt, ob die gemessene Kennlinie über oder unter der Referenzkennlinie samt Toleranzbereich liegt. War die Schaltung zu fest, so wird in einem siebten Schritt ein Korrekturfaktor KF zu -1 gebildet. War die Schaltung zu weich, so wird in einem achten Schritt der Korrekturfaktor KF zu +1 gebildet. Die weitere Verarbeitung des Korrekturfaktors erfolgt anhand des Flußdiagramms der Figur 4. In einem ersten Schritt nach dem Start wird der aktuelle Korrekturfaktor KF für den momentanen Bereich - bei Hochschaltungen Drosselklappenöffnungswinkel, bei Rückschaltungen Geschwindigkeit - eingelesen. In einem zweiten Schritt wird der Korrekturwert $K_x$ gebildet nach der Beziehung

$$K_x = K_{x\,vorh} + KF,$$

wobei $K_{x\,vorh}$ dem vorhandenen Korrekturwert entspricht.

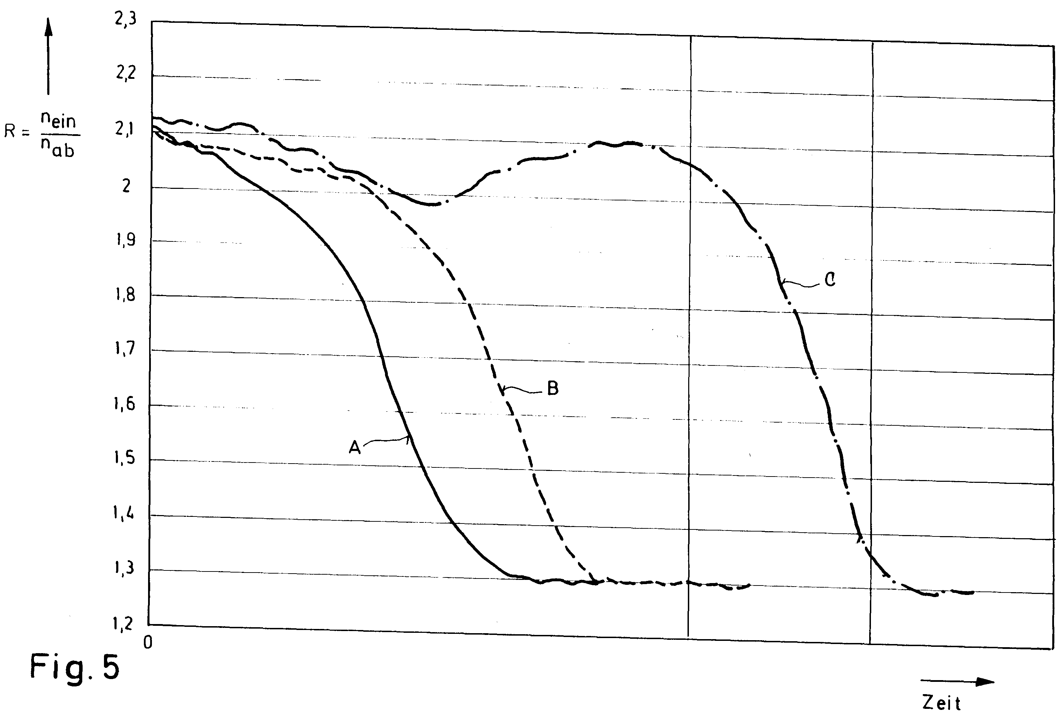

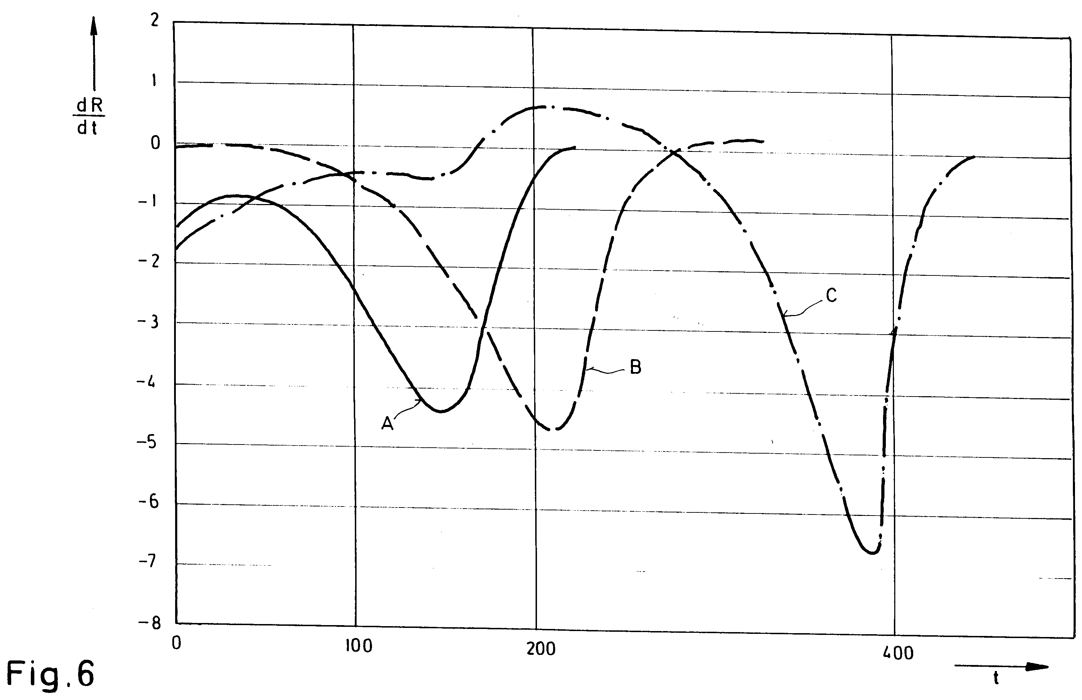

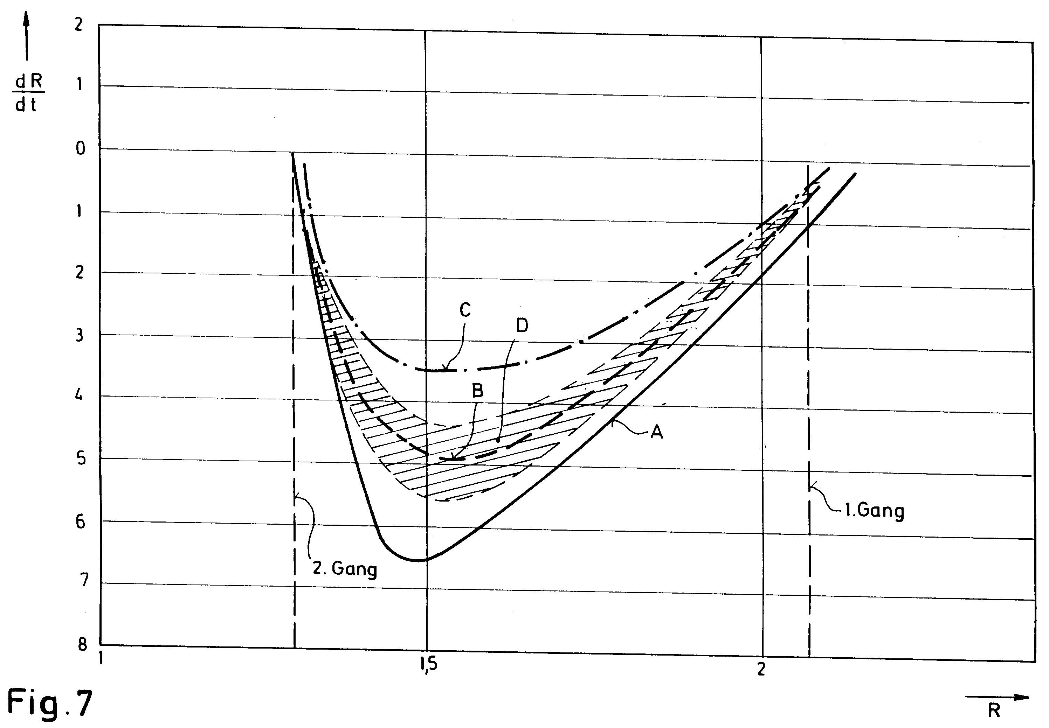

Dieser, im zweiten Schritt gebildete Korrekturwert dient der Berechnung des aktuellen Druckes $P_{akt}$ bzw. des aktu-ellen Öldurchflusses $\dot{Q}_{akt}$, derart, daß ein zunächst ermittelter Korrekturfaktor sich erst im darauffolgenden identischen Gangwechsel auswirkt. Durch die Bereichsfestlegung bei Hochschaltungen nach Drosselklappenöffnungswinkel, bei Rückschaltungen nach Geschwindigkeit beim jeweiligen Gangwechsel wird die Identität des Gangwechsels festgelegt bzw. geprüft. In einem dritten Schritt wird abgefragt, ob der Korrekturwert $K_x$ betragsmäßig größer 3 ist. Ist dies der Fall, so wird in einem vierten Schritt an ein Display oder eine akustische Warneinrichtung eine Ausgabe abgegeben, daß die Schaltung nicht ordnungsgemäß verlaufen ist, z. B. DK = 20% 1-2 Schaltung, verknüpft mit dem Hinweis eine Service-Station aufzusuchen. Anhand der Diagramme der Figuren 5 bis 8 ist ausgeführt, wie das Kriterium Schaltqualität durch Vergleich von Kennlinie R' als Funktion von R mit einer Referenzkennlinie einschließlich eines Toleranzbereiches ermittelt wird. Figur 5 zeigt einen Hochschaltvorgang vom 1. in den 2. Gang unter Vollastbedingungen, d. h. bei großem Drosselklappenöffnungswinkel. Dabei ist das Übersetzungsverhältnis R als Funktion der Schaltzeit aufgetragen. Das Übersetzungsverhältnis im ersten Gang beträgt zu Beginn des Schaltvorganges etwa 2,1, im 2. Gang am Ende des Schaltvorganges etwa 1,3. Es sind drei Kennlinien A, B, C dargestellt, die unterschiedliche Schaltqualitäten repräsentieren. Kennlinie A kennzeichnet einen Schaltverlauf, bei dem die Schaltqualität als zu hart empfunden wird. Bei Kennlinie B ist die Schaltqualität in Ordnung, bei Kennlinie C ist sie sehr weich. Abgesehen von den unterschiedlichen Kurvenformen weichen auch die Schaltzeiten, nämlich die Zeit vom Beginn des Schaltvorgangs bis zu dessen Beendigung stark voneinander ab. Der Unterschied zwischen Kennlinie A und Kennlinie B ist nicht so gravierend wie der zu C. Deshalb wird nach dem erfindungsgemäßen Verfahren nicht unmittelbar die Schaltzeit als Kriterium für die Schaltqualität herangezogen, sondern der gesamte Kurvenverlauf. Gemäß Figur 6 wird die erste Ableitung der drei Kennlinien A, B, C als Funktion der Zeit gebildet. Schließlich zeigt das Diagramm der Figur 7 die erste Ableitung des Übersetzungsverhältnisses dR/dt als Funktion des Übersetzungsverhältnisses R für die zuvor in Figur 5 und 6 gezeigten Kennlinien. Mit D ist eine in der elektronischen Einrichtung 1 abgespeicherte Referenzkennlinie dargestellt, die einschließlich ihres Toleranzbereiches ein Referenzkennlinienband ergibt, mittels dessen durch Vergleich in der elektronischen Einrichtung 1 entschieden werden kann, ob die Schaltqualität in Ordnung, zu fest oder zu weich ist. Liegt die aktuelle gemessene Kennlinie beispielsweise im Toleranzbereich, so wird die Schaltqualität als in Ordnung erkannt. Liegt die aktuelle gemessene Kennlinie über dem Toleranzbereich, dann wird der Schaltvorgang als zu weich erkannt. Liegt die Kennlinie unterhalb des Toleranzbereichs, so wird der Schaltvorgang als zu fest erkannt.

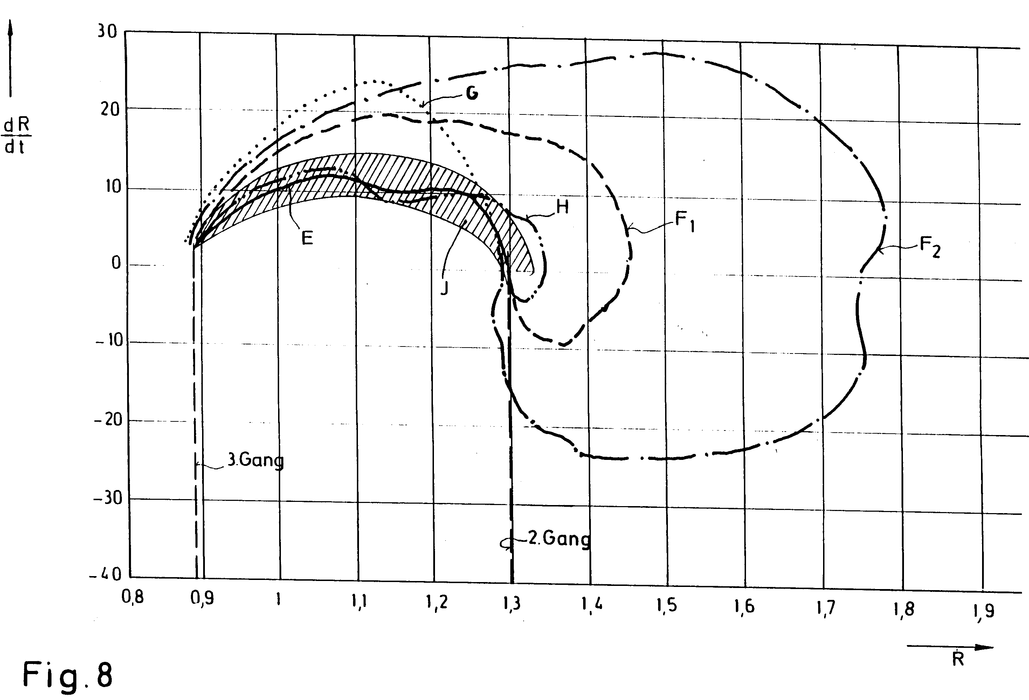

Figur 8 zeigt ein Diagramm für die erste Ableitung des Übersetzungsverhältnisses als Funktion des Übersetzungsverhältnisses bei einer Rückschaltung vom 3. in den 2. Gang. Die Kurve E zeigt dabei einen Rückschaltvorgang dessen Schaltqualität als in Ordnung befunden wurde. Bei der Kurve $F_1$ war durch zu geringen Leitungsdruck der Schaltvorgang als zu weich erkannt worden. Bei der Kurve $F_2$ war der Leitungsdruck gegenüber der Kurve $F_1$ nochmals erniedrigt worden und bei der Kurve G war der Leitungsdruck gegenüber der Kurve E erhöht worden. Die Kurven E, $F_1$, $F_2$, G repräsentieren eine Rückschaltung vom 3. in den 2. Gang bei einer Geschwindigkeit von etwa 50 km/h, während die Kurve H eine Rückschaltung vom 3. in den 2. Gang bei einer Geschwindigkeit von 80 km/h darstellt, bei einem zu geringen Leitungsdruck. Jeder Kurvenverlauf wie beispielsweise derjenige der Kurven $F_1$, $F_2$ und H, der sich im Diagramm der Figur 8 rechts vom Übersetzungsverhältnis des zweiten Ganges von etwa 1,3 erstreckt, weist darauf hin, daß der Schaltvorgang nicht in Ordnung ist, daß er zu weich verläuft und daß der Leitungsdruck erhöht werden müßte. Das Toleranzband J charakterisiert wiederum den Referenzkennlinienverlauf einschließlich der zugeordneten Toleranzen. Die Referenzkennlinien sind für ein bestimmtes Getriebe ausgelegt und für Hochschaltungen in Drosselklappenöffnungswinkelbereiche unterteilt, für Rückschaltungen werden die entsprechenden Geschwindigkeiten, bei denen die Rückschaltung erfolgt, mit in die Bereichserkennung eingelesen. Die folgenden Tabellen stehen exemplarisch für Hoch- bzw. Rückschaltungen.

Tabelle 1 wird auf eine Hochschaltung vom 1. in den 2. Gang angewandt. Es handelt sich dabei z. B. um eine Schaltung Freilauf zu Kupplung. Eine Hochschaltung vom 3. in den 4. Gang wird durch ähnliche Werte charakterisiert. Tabelle 2 findet Anwendung auf eine Hochschaltung vom 2. in den 3. Gang, wobei es sich um eine Schaltung von Kupplung zu Kupplung handelt. Tabelle 3 wird angewandt auf eine Rückschaltung vom 3. in den 2. Gang, wobei es sich wieder um eine Schaltung von Kupplung zu Kupplung handelt und Tabelle 4 findet Anwendung auf eine Rückschaltung vom 4. in den 3. Gang, wobei es sich um eine Schaltung von Freilauf zu Kupplung handelt.

Tabelle 1)

| Referenzkennlinien R' = f(R); Grenzwerte 1 - 2 Schaltung | | | | | | | | | | | |
|---|---|---|---|---|---|---|---|---|---|---|---|
| DK | 2,46 | 2,4 | 2,3 | 2,1 | 1,9 | 1,7 | 1,6 | 1,55 | 1,5 | 1,45 | 1,42 | R |
| 0-40% | 2 | 5 | 6 | 7 | 7 | 6 | 5 | 4 | 3 | 2 | 1 | R' |
| 41-100% | 1 | 3 | 5 | 6 | 7 | 8 | 6 | 3 | 3 | 1 | 1 | R' |
| KD | 1 | 5 | 6 | 6 | 8 | 7 | 7 | 6 | 4 | 3 | 2 | R' |

Tabelle 2)

| Referenzkennlinien R' = f(R); Grenzwerte 2 - 3 Schaltung | | | | | | | | | |
|---|---|---|---|---|---|---|---|---|---|
| DK | 1,4 | 1,35 | 1,3 | 1,2 | 1,1 | 1,05 | 1 | 0,95 | 0,93 | R |
| 0-40% | 1 | 3 | 5 | 6 | 7 | 8 | 6 | 3 | 3 | R' |
| 41-100% | 1 | 5 | 6 | 6 | 8 | 7 | 7 | 6 | 4 | R' |
| KD | 2 | 5 | 6 | 7 | 7 | 6 | 5 | 4 | 3 | R' |

Tabelle 3)

| Referenzkennlinien R' = f(R); Grenzwerte 3 - 2 Schaltung | | | | | | | | | | |
|---|---|---|---|---|---|---|---|---|---|---|
| Übersetzung | 0,93 | 0,95 | 1 | 1,05 | 1,15 | 1,25 | 1,3 | 1,35 | 1,4 | R |
| R' | 5 | 8 | 9 | 11 | 15 | 13 | 11 | 7 | 3 | R' |

Tabelle 4)

| Referenzkennlinien R' = f(R); Grenzwerte 4 - 3 Schaltung | | | | | | | | | | |
|---|---|---|---|---|---|---|---|---|---|---|
| Übersetzung | 0,7 | 0,72 | 0,76 | 0,79 | 0,81 | 0,85 | 0,88 | 0,9 | 0,92 | R |
| R' | 3 | 3 | 5 | 8 | 12 | 12 | 10 | 7 | 3 | R' |

Gemäß Tabelle 1) und 2) sind bei Hochschaltungen drei Bereiche für den Drosselklappenöffnungswinkel vorgesehen, nämlich der Bereich 0 bis 40 %, 41 - 100 % und KD (Kick-Down). Somit handelt es sich bei Hochschaltungen um ein Referenzkennfeld, während bei Rückschaltungen gemäß Tabelle 3) und 4) nur eine Referenzkennlinie zum Tragen kommt.

Die adaptive Korrektur der Schaltqualität soll anhand eines Beispieles einer Hochschaltung vom 1. in den 2. Gang erläutert werden. Es sei angenommen, daß der Schaltbefehl zum Wechseln des Ganges bei einem Drosselklappenöffnungswinkel von 50 % erfolgt. Damit ist die Referenzkennlinie aus der Tabelle 1) mit dem Bereich 41 bis 100 % des Drosselklappenöffnungswinkels auszuwählen. Gemäß Figur 7 entspräche diese Referenzkennlinie dem Kurvenverlauf D, einschließlich eines Toleranzstreifens. Die aktuelle Schaltkennlinie wird nun gemessen und mit der Referenzkennlinie auf das Kriterium "Schaltqualität in Ordnung" gemäß viertem Programmschritt des Flußdiagramms der Figur 3 überprüft. Hat die aktuelle Kennlinie beispielsweise den Verlauf von C in der Figur 7, so wird gemäß Flußdiagramm der Figur 3 in der Abfrage "zu fest?" festgestellt: Nein, da der Verlauf von C über der Referenzkennlinie D liegt. Damit wird ein Korrekturfaktor KF gemäß Flußdiagramm der Figur 3 zu +1 gesetzt. Gemäß Flußdiagramm von Figur 4 wird nun mittels des aktuellen Korrekturfaktors KF der Korrekturwert $K_x$ berechnet, indem zum vorhergehenden Korrekturwert $K_{x\ vorh}$ der aktuelle Korrekturfaktor KF hinzuaddiert wird. Dieser neu gebildete Korrekturwert $K_x$ wirkt sich aber erst bei einem nachfolgenden identischen Schaltvorgang aus, d. h. falls zu einem späteren Zeitpunkt wieder eine Schaltung vom 1. in den 2. Gang bei einer Drosselklappenöffnung von 50 % erfolgen soll, wird der Leitungsdruck gemäß der mathematischen Beziehung

$$P_{akt} = P_{Kalibr.} + \frac{K_x \cdot P_{Kalibr.}}{D_1}$$

gebildet und mit einem diesem proportionalen Wert entsprechenden Tastverhältnis das Magnetventil 8 angesteuert, so daß jetzt bei diesem Schaltvorgang der Leitungsdruck erhöht ist und damit die aktuelle Kennlinie in den Bereich des Toleranzbandes D verschoben wird. Sollte dies nach der ersten Korrektur noch nicht ausreichend erfolgt sein, wird eine weitere Korrektur um den Korrekturfaktor +1 erforderlich sein, so daß eine adaptive Anpassung erfolgt. Der Korrekturwert $K_x$ hat dann den Wert 2. Sollte eine weitere Anpassung notwendig werden, da der Leitungsdruck immer noch zu gering ist, wird in einem nächsten darauffolgenden identischen Schritt der Korrekturwert nochmals um +1 erhöht, so daß $K_x$ dann den Wert +3 hat. Falls eine weitere adaptive Anpassung notwendig werden sollte aufgrund des Vergleichs der Kennlinienverläufe, würde der Korrekturwert $K_x$ betragsmäßig größer 3 werden, was zur Folge hat, daß gemäß drittem Schritt des Flußdiagramms der Figur 4 über eine Display-Ausgabe oder eine akustische Warneinrichtung angezeigt wird, daß bei einem Drosselklappenöffnungswinkel von 50 % und einer Hochschaltung vom 1. in den 2. Gang der Schaltvorgang nicht mehr in Ordnung ist und eine Service-Station aufgesucht werden muß. Für den Fall daß der Leitungsdruck zu hoch war im Zeitpunkt des Schaltvorganges vom 1. in den 2. Gang bei beispielsweise einer Drosselklappenöffnung von 80 %, wird bei der Abfrage "Schaltqualität in Ordnung" gemäß Flußdiagramm der Figur 3 in der weiteren Abfrage "zu fest?" und der Entscheidung "Ja" der Korrekturfaktor zu -1 gebildet, und anschließend wird gemäß Flußdiagramm der Figur 4 der Korrekturwert $K_x$ gebildet aus $K_{x\ vorh} + K_F$, mit KF = -1, was letztendlich zu einer adaptiven Erniedrigung des Leitungsdruckes führt. Sollte auch dieses Mal der Leitungsdruck noch zu hoch sein, wird beim nachfolgenden identischen Schaltvorgang der Leitungsdruck nochmals verringert, indem der Korrekturwert $K_x$ um den Korrekturfaktor 1 verringert wird, wodurch über die zuvor genannte mathematische Beziehung der Leitungsdruck nochmals verringert wird. War $K_x$ zu Beginn des Schaltvorganges bei einer Drosselklappenöffnung von 80 % nach zuletzt genanntem Beispiel gleich 0 und der Leitungsdruck zu groß, so ist $K_x$ nach zweimaligem adaptivem Anpassen jetzt gleich -2. Sollte eine weitere adaptive Anpassung im Hinblick auf eine Verringerung des Leitungsdruckes notwendig werden und $K_x$ betragsmäßig größer 3 werden, so wird ebenfalls als Diagnoseausgabe an das Display die Information ausgegeben:

Schaltvorgang nicht in Ordnung bei Drosselklappenöffnungswinkel = 80 % und 1-2 Schaltung; Service-Station aufsuchen. Bei Anlegen des Bremsbandes des Elements 20 der Figur 2 wird der Öldurchfluß $Q_{akt}$ über den Korrekturwert $K_x$ ebenfalls adaptiv angepaßt. Es wird also bei jedem Gangwechsel im Falle einer Hochschaltung eine Abfrage des Drosselklappenöffnungswinkels 5 in der elektronischen Einrichtung 1 erfolgen, der dort abgespeichert wird, und die bei diesem spezifischem Schaltvorgang ermittelten Korrekturwerte $K_x$ werden dem Drosselklappenöffnungswinkel zugeordnet in Form einer Korrekturtabelle, die fortlaufend aktualisiert wird, wobei sich der aktualisierte Korrekturwert $K_x$ erst bei dem unmittelbar darauffolgenden identischen Gangwechsel auswirkt. Die Identität des Gangwechsels ergibt sich dabei aus der Art der Schaltung, z. B. von 1 nach 2 und der Stellung des Drosselklappenöffnungswinkels, z. B. 50 %. Bei jeder Rückschaltung erfolgt eine Abfrage der Fahrzeuggeschwindigkeit in der Einrichtung 1, die abgespeichert wird, und die bei diesem spezifischem Schaltvorgang ermittelten Korrekturwerte $K_x$ werden der Fahrzeuggeschwindigkeit zugeordnet ebenfalls in Form einer Korrekturtabelle, die fortlaufend aktualisiert wird, wobei sich der aktualisierte Korrekturwert $K_x$ erst bei dem unmittelbar darauffolgenden identischen Gangwechsel auswirkt. Die Tabellen 5) und 6) zeigen beispielhaft Korrekturwerte $K_x$ für eine Hochschaltung z. B. vom 1. in den 2. Gang bei verschiedenen Drosselklappenöffnungswinkeln und die Tabelle 6) zeigt Korrekturwerte $K_x$ für einen Rückschaltvorgang beispielsweise vom 3. in den 2. Gang bei verschiedenen Geschwindigkeiten.

Tabelle 5)

| (Korrekturtabelle) Hochschaltung 1 - 2 | | | | | | | | | | | |
|---|---|---|---|---|---|---|---|---|---|---|---|
| DK ) [%] | 10 | 20 | 30 | 40 | 50 | 60 | 70 | 80 | 90 | 100 | KD |
| Korrekturwert $K_x$ | 0 | 0 | 1 | 0 | 3 | 0 | 0 | 0 | 0 | -1 | 1 |

Tabelle 6)

| (Korrekturtabelle) Rückschaltung 3 - 2 | | | | | | | |
|---|---|---|---|---|---|---|---|
| v [km/h] | 30 | 45 | 60 | 75 | 90 | 110 | 130 |
| Korrekturwert $K_x$ | 0 | 2 | 1 | 0 | -1 | -2 | 0 |

Soll z. B. eine Hochschaltung gemäß Tabelle 5) vom 1. in den 2. Gang bei einem Drosselklappenöffnungswinkel von 50 % erfolgen, so wird der Leitungsdruck mit dem Korrekturwert $K_x$ = 3 beaufschlagt. Soll z. B. eine Rückschaltung gemäß Tabelle 6) vom 3. in den 2. Gang bei einer Geschwindigkeit von 90 km/h erfolgen, so wird der Leitungsdruck mit dem Korrekturwert $K_x$ = -1 beaufschlagt, gemäß den zuvor genannten mathematischen Beziehungen.

**Patentansprüche**

1. Verfahren zur Korrektur der Schaltqualität eines automatischen Getriebes (2), das mit einem Motor gekoppelt ist und bei dem über druck- oder öldurchsatzbeaufschlagende Stellglieder Reibelemente (14, 15, 17, 18, 19 und 20) in Eingriff bringbar sind zur Ausführung von Schaltvorgängen, bei dem der von den Stellgliedern beaufschlagte Leitungsdruck mittels einer elektronischen Einrichtung (1) erfaßt und in Abhängigkeit von verschiedenen Betriebsparametern korrigiert wird, für jeden spezifischen Schaltvorgang Werte dieser Betriebsparameter gemessen und in einer Einrichtung mit vorhandenen Referenzkennwerten verglichen werden, wobei bei Ungleichheit ein Korrekturfaktor (KF) ermittelt wird, der beim nächsten identischen Schaltvorgang zu einer inkrementalen Erhöhung oder dekrementalen Erniedrigung eines Korrekturwertes ($K_x$) um den Korrekturfaktor (KF) führt und somit eine Korrektur des Leitungsdruckes oder des Öldurchflusses mittels der druck- oder öldurchsatzbeaufschlagenden, von der elektronischen Einrichtung entsprechend dem Korrekturwert ($K_x$) angesteuerten Stellglieder erfolgt, dadurch gekennzeichnet, daß für jeden spezifischen Schaltvorgang als Betriebsparameter neben dem sich ergebenden Übersetzungsverhältnis (R) als Funktion der Zeit vom Auslösen des Schaltvorganges bis zu dessen Beendigung auch die erste Ableitung (dR/dt) des Übersetzungsverhältnisses (R) gebildet und in der elektronischen Einrichtung (1) eine Zuordnung von Werten des Übersetzungsverhältnisses (R) zu den entsprechenden Werten der ersten Ableitung (dR/dt) in Form einer Kennlinie erfolgt, und daß diese gemessenen Kennlinien mit in der Einrichtung (1) vorhandenen Referenzkennlinien einschließlich eines Toleranzbereichs verglichen werden, woraus sich bei Ungleichheit der Korrekturfaktor (KF) ergibt.

2. Verfahren nach Anspruch 1, dadurch gekennzeichnet, daß die Einrichtung (1) bei einem Korrekturwert $|K_x|$ > A, wobei A eine natürliche Zahl ist, über ein Display oder eine akustische Warneinrichtung einen Hinweis auf einen fehlerhaft verlaufenden Schaltvorgang ausgibt.

3. Verfahren nach Anspruch 2, <u>dadurch gekennzeichnet</u>, daß A vorzugsweise den Wert 3 hat.

4. Verfahren nach Anspruch 1, <u>dadurch gekennzeichnet</u>, daß der einzustellende Leitungsdruck in der elektronischen Einrichtung (1) errechnet wird, nach der mathematischen Beziehung:

$$P_{akt} = P_{Kalibr.} + \frac{K_x \cdot P_{Kalibr.}}{D_1}$$

wobei sind:

$P_{akt}$ = der aktuell zu verwendende Druck
$P_{Kalibr.}$ = der Basisdruck für die jeweilige Schaltung
$K_x$ = Korrekturwert, definiert durch die adaptive Änderung
$D_1$ = veränderbarer Wert zur Sensitivitätsanpassung (z. B. 10)

5. Verfahren nach Anspruch 1, <u>dadurch gekennzeichnet</u>, daß der einzustellende Öldurchsatz in der elektronischen Einrichtung (1) errechnet wird, nach der mathematischen Beziehung:

$$\dot{Q}_{akt} = \dot{Q}_{Kalibr.} + \frac{K_x \cdot \dot{Q}_{Kalibr.}}{D_2}$$

wobei sind:

$\dot{Q}_{akt}$ = der aktuell zu verwendende Durchfluß
$\dot{Q}_{Kalibr.}$ = der Basiswert
$K_x$ = der Korrekturwert
$D_2$ = veränderbarer Wert zur Sensitivitätsanpassung (z. B. 10)

6. Verfahren nach Anspruch 1, <u>dadurch gekennzeichnet</u>, daß bei jedem Gangwechsel im Falle einer Hochschaltung eine Abfrage des Drosselklappenöffnungswinkels (5) erfolgt und in der Einrichtung (1) abgespeichert wird und die bei diesem spezifischen Schaltvorgang ermittelten Korrekturwerte ($K_x$) dem Drosselklappenöffnungswinkel zugeordnet werden in Form einer Korrekturtabelle, die fortlaufend aktualisiert wird, wobei sich der aktualisierte Korrekturwert ($K_x$) erst bei dem unmittelbar darauffolgenden identischen Gangwechsel auswirkt.

7. Verfahren nach Anspruch 1, <u>dadurch gekennzeichnet</u>, daß bei jedem Gangwechsel im Falle einer Rückschaltung eine Abfrage der Fahrzeuggeschwindigkeit erfolgt und in der Einrichtung (1) gespeichert wird und die bei diesem spezifischen Schaltvorgang ermittelten Korrekturwerte ($K_x$) der Fahrzeuggeschwindigkeit zugeordnet werden in Form einer Korrekturtabelle, die fortlaufend aktualisiert wird, wobei sich der aktualisierte Korrekturwert ($K_x$) erst bei dem unmittelbar darauffolgenden identischen Gangwechsel auswirkt.

8. Verfahren nach Anspruch 1, <u>dadurch gekennzeichnet</u>, daß die Stellglieder (8, 9) Magnetventile sind, die entsprechend den Korrekturwerten ($K_x$) und den daraus sich ergebenden mathematischen Beziehungen für den aktuell zu verwendenden Druck $P_{akt}$ bzw. Durchfluß $\dot{Q}_{akt}$ mit einem zu diesen Größen proportionalen Tastverhältnis elektrisch angesteuert werden.

**Claims**

1. Method for correcting the shift quality of an automatic transmission (2) which is coupled to an engine and in which friction elements (14, 15, 17, 18, 19 and 20) can be brought into engagement by actuators acting on the pressure or oil throughput for the performance of shift operations, in which the line pressure applied by the actuators is detected by means of an electronic device (1) and corrected as a function of different operating parameters, values of these operating parameters are measured for each specific shift operation and compared in a device with existing reference characteristics, wherein in case of inequality there is determined a correction factor (KF) which at the next identical shift operation leads to an incremental increase or decremental decrease of a correction value ($K_x$) by the correction factor (KF) and therefore correction of the line pressure or of the oil throughflow takes place by means of the actuators which act on the pressure or oil throughput and are driven by the electronic device according to the correction value ($K_X$), characterised in that the first derivative (dR/dt) of the transmission ratio (R) is also formed for each specific shift operation as an operating parameter in addition to the transmission ratio (R) arising, as a function of the time from triggering of the shift operation to completion thereof, and assignment of values of the transmission ratio (R) to the corresponding values of the first derivative (dR/dt) in the form of a characteristic curve takes place in the electronic device (1), and in that these measured characteristic curves are compared with reference characteristic curves existing in the device (1) including a tolerance range, from which the correction factor (KF) results in case of inequality.

2. Method according to claim 1, characterised in that the device (1), in case of a correction value $|K_x| > A$, where A is a natural number, issues an indication of an erroneously proceeding shift operation via a display or an acoustic warning device.

3. Method according to claim 2, characterised in that A preferably has a value of 3.

4. Method according to claim 1, characterised in that the line pressure to be set is calculated in the electronic device (1), according to the mathematical relationship:

$$P_{curr} = P_{calibr} + \frac{K_x \cdot P_{calibr}}{D_1}$$

where:

$P_{curr}$ = the pressure to be used currently
$P_{calibr}$ = the base pressure for the respective shift
$K_x$ = correction value, defined by the adaptive variation
$D_1$ = variable value for sensitivity adaptation (e.g. 10)

5. Method according to claim 1, characterised in that the oil throughput to be set is calculated in the electronic device (1), according to the mathematical relationship:

$$Q_{curr} = Q_{calibr} + \frac{K_x \cdot Q_{calibr}}{D_2}$$

where:

$Q_{curr}$ = the throughflow to be used currently
$Q_{calibr}$ = the base value
$K_x$ = the correction value
$D_2$ = variable value for sensitivity adaptation (e.g. 10)

6. Method according to claim 1, characterised in that at each gear change in case of changing up the throttle value opening angle (5) is called up and stored in the device (1) and the correction values ($K_x$) which are determined for this specific shift operation are assigned to the throttle valve opening angle in the form of a correction table which is continuously updated, wherein the updated correction value ($K_x$) does not take effect until the immediately following identical gear change.

7. Method according to claim 1, characterised in that at each gear change in case of changing back the vehicle speed is called up and stored in the device (1) and the correction values ($K_x$) which are determined for this specific shift operation are assigned to the vehicle speed in the form of a correction table which is continuously updated, wherein the updated correction value ($K_x$) does not take effect until the immediately following identical gear change.

8. Method according to claim 1, characterised in that the actuators (8, 9) are solenoid valves which are driven electrically according to the correction values ($K_x$) and the resulting mathematical relationships for the pressure $P_{curr}$ or throughflow $Q_{curr}$ to be used currently, with a pulse duty factor proportional to these quantities.

**Revendications**

1. Procédé de correction de la qualité du changement de rapport d'une transmission automatique (2) qui est accouplée avec un moteur, dans laquelle des éléments de friction (14, 15, 17, 18, 19 et 20) peuvent être amenés en prise par l'intermédiaire d'organes de réglage de pression ou de débit d'huile, en vue de l'exécution d'opérations de changement de rapport, et dans laquelle la pression réglée par les organes de réglage est détectée à l'aide d'un dispositif électronique (1) et corrigée en fonction de divers paramètres de fonctionnement, les valeurs de ces paramètres de fonctionnement sont mesurées pour chaque opération spécifique de changement de rapport et sont comparées dans un dispositif avec des valeurs de référence existantes et, en cas d'inégalité, un facteur de correction (KF) est déterminé, facteur qui conduit, lors de la prochaine opération identique de changement de rapport, à une augmentation ou diminution par incréments d'une valeur de correction ($K_x$) par le facteur de correction, la pression ou le débit d'huile étant corrigé au moyen des organes de réglage de pression ou de débit d'huile, commandés par le dispositif électronique en fonction de la valeur de correction ($K_x$), **caractérisé** par le fait que pour chaque opération spécifique de changement de rapport, sont formés en tant que paramètres de fonctionnement, outre le rapport de transmission (R) en fonction du temps depuis le déclenchement de l'opération de changement de rapport jusqu'à son achèvement, également la dérivée première (dR/dt) du rapport de transmission (R) et, dans le dispositif électronique (1), des valeurs du rapport de transmission (R) sont associées aux valeurs correspondantes de la dérivée première (dR/dt) sous la forme d'une courbe caractéristique, et que ces courbes caractéristiques mesurées sont comparées avec des courbes caractéristiques de référence se trouvant dans le dispositif (1), y compris une plage de tolérances, ce qui donne le facteur de correction (KF) en cas d'inégalité.

2. Procédé suivant la revendication 1, **caractérisé** par le fait que dans le cas d'une valeur de correction $|K_x| > A$, où A correspond à un chiffre naturel, le dispositif (1) émet par un système de visualisation ou un dispositif d'avertissement acoustique une indication relative à une opération de changement de rapport qui s'est déroulée de façon défectueuse.

3. Procédé suivant la revendication 2, **caractérisé** par le fait que A présente de préférence la valeur 3.

4. Procédé suivant la revendication 1, **caractérisé** par le fait que la pression à établir est calculée dans le dispositif électronique (1) suivant la relation mathématique :

$$P_{act} = P_{calibr.} + \frac{K_x \cdot P_{calibr.}}{D_1}$$

où

$P_{act}$ = pression utilisée actuellement
$P_{calibr}$ = pression de base pour chaque changement de rapport
$K_x$ = valeur de correction définie par la variation adaptative
$D_1$ = valeur variable pour l'adaptation de sensitivité (par exemple 10)

5. Procédé suivant la revendication 1, **caractérisé** par le fait que le débit d'huile à établir est calculé dans le dispositif électronique (1) suivant la relation mathématique :

$$\dot{Q}_{act} = \dot{Q}_{calibr.} + \frac{K_x \cdot \dot{Q}_{calibr.}}{D_2}$$

où

$\dot{Q}_{act}$ = débit actuellement utilisé
$\dot{Q}_{calibr}$ = valeur de base
$K_x$ = valeur de correction
$D_2$ = valeur variable pour l'adaptation de sensitivité (par exemple 10)

6. Procédé suivant la revendication 1, **caractérisé** par le fait qu'à chaque changement de rapport vers le haut, l'angle d'ouverture du papillon (5) est mesuré et mémorisé dans le dispositif (1) et que les valeurs de correction ($K_x$) déterminées lors de cette opération spécifique de changement de rapport sont associées à l'angle d'ouverture de papillon sous la forme d'un tableau de correction qui est actualisé en permanence, la valeur de correction actualisée ($K_x$) n'intervenant que lors du changement de rapport identique immédiatement suivant.

7. Procédé suivant la revendication 1, **caractérisé** par le fait qu'à chaque changement de rapport vers le bas, la vitesse du véhicule est mesurée et mémorisée dans le dispositif (1) et que les valeurs de correction ($K_x$) déterminées

lors de cette opération spécifique de changement de rapport sont associées à la vitesse du véhicule sous la forme d'un tableau de correction qui est actualisé en permanence, la valeur de correction actualisée ($K_x$) n'intervenant que lors du changement de rapport identique immédiatement suivant.

8. Procédé suivant la revendication 1, **caractérisé** par le fait que les organes de réglage (8, 9) sont des électrovalves qui, en fonction des valeurs de correction ($K_x$) et des relations mathématiques qui en résultent pour la pression ($P_{act}$) ou le débit ($Q_{act}$) à utiliser actuellement, sont commandées électriquement avec un rapport de cycle proportionnel à ces grandeurs.

Fig. 1

Fig. 2

START

1

2

$$R = \frac{n_{ein}}{n_{ab}}$$

3

$$R' = \frac{dR}{dt}$$

4

6

5

KF = 0

8

KF = +1

7

KF = -1

STOP

Fig. 3

14

Fig.4

$$R = \frac{n_{ein}}{n_{ab}}$$

Fig. 5

Fig.6

$\dfrac{dR}{dt}$

R

1. Gang

2. Gang

A
B
C
D

Fig. 7

Fig. 8